# EUROPÄISCHE PATENTSCHRIFT

(11) **EP 2 279 431 B1**
(45) Veröffentlichungstag und Bekanntmachung des Hinweises auf die Patenterteilung: **20.02.2019**
(21) Anmeldenummer: 09749549.3
(22) Anmeldetag: 07.05.2009
(51) Int. Cl.: G01S 15/93, G01S 7/523

(54) **ANORDNUNG ZUR STEUERUNG VON ULTRASCHALLSENSOREN**
ARRANGEMENT FOR CONTROLLING ULTRASONIC SENSORS
DISPOSITIF POUR COMMANDER DES CAPTEURS À ULTRASONS

(30) Priorität: 23.05.2008 DE 102008024963
(43) Veröffentlichungstag der Anmeldung: 02.02.2011
(73) Patentinhaber: Valeo Schalter und Sensoren GmbH, 74321 Bietigheim-Bissingen (DE)
(72) Erfinder: GOTZIG, Heinrich, 74081 Heilbronn (DE); LILL, Anton, 74348 Lauffen am Neckar (DE); BAUER, Jürgen, 71732 Tamm (DE)
(86) Internationale Anmeldenummer: PCT/EP2009/003252
(87) Internationale Veröffentlichungsnummer: WO 2009/141059

(56) Entgegenhaltungen:
- EP-A- 1 293 381
- WO-A-01/65519
- DE-A1- 4 103 069
- DE-A1-102006 030 616
- US-A- 6 115 654

## Beschreibung

### Stand der Technik

Die Erfindung betrifft eine Anordnung zur Steuerung von Ultraschallsensoren, zum Beispiel für ein ultraschallbasierendes Umfelderkennungssystem als Parkassistenz in einem Kraftfahrzeug, nach der Gattung des Hauptanspruchs.

Bei solchen ultraschallbasierenden Umfelderkennungssystemen werden mindestens ein Ultraschallsensor oder mehrere beispielsweise in der vorderen und/oder hinteren Stoßstange oder auch seitlich an einem Kraftfahrzeug verbaut. Jeder Ultraschallsensor sendet dabei ein Ultraschallsignal aus, welches von einem möglichen Objekt bzw. Hindernis reflektiert wird und von dem gleichen Ultraschallsensor und oder von weiteren Ultraschallsensoren empfangen und dann einer Signalauswertung zugeführt werden kann.

Aus der DE 10 2006 030 616 A1 ist es bekannt, dass Ultraschallsensoren, die Bestandteil eines solchen Sensorsystems für ein Umfelderkennungssystem sind, über eine Mehrzahl von Schnittstelleneinheiten mit einem separaten zentralen Steuergerät zusammenarbeiten. Diese Schnittstelleneinheiten weisen jeweils entsprechende Sensor- und Aktorkanäle auf, über die die Ultraschallsensoren vom Steuergerät unidirektional gesteuert werden können und verfügen auch zum Beispiel über Leistungstreiber, über die Signalgeber angesteuert werden können.

Bekannt ist aus diesem Stand der Technik darüber hinaus, dass die Schnittstelleneinheiten als ASICs ausgebildet sind, die entsprechend konfiguriert die zuvor erwähnten Sensor- und Aktorkanäle bereitstellen und steuern. Auch ist hieraus bekannt, dass diese ASICs mit dem Steuergerät über eine Datenleitung kommunizieren und damit in die Anordnung zur Steuerung von Ultraschallsensoren integriert werden können.

Bei solchen Anordnungen zur Steuerung von Ultraschallsensoren werden jedoch auch hohe Anforderung hinsichtlich einer zeitkritischen Bearbeitung (sogenannte "time of flight" Messung der Ultraschallpakete) der auszuwertenden Signale gestellt, die in Echtzeit verarbeitet werden sollten, sodass in der Regel hierzu separate Mikroprozessoren mit einem sogenannten capture register notwendig sind.

Aus der WO 01/65519 A1 ist eine Anordnung zur Steuerung von Abstandssensoren, wie z. B. Ultraschallsensoren für Fahrzeuge bekannt, wobei die Abstandssensoren über elektrische Leitungen mit einem Systemprozessor verbunden sind, welcher die Messungen steuert und die von den Abstandssensoren empfangenen Signale auswertet. Aufgrund dieser Signalauswertung erzeugt der Systemprozessor ein korrespondierendes auf eine mögliche Kollision hinweisendes Ausgabesignal, das über den Datenbus des Fahrzeugs an einen separaten Fahrzeugprozessor übermittelt wird. Der Fahrzeugprozessor empfängt das Ausgabesignal und erzeugt korrespondierende Kontrollsignale für optische und akustische Wameinrichtungen, um den Fahrer vor einer möglichen Kollision zu warnen.

Es kann somit als eine Aufgabe der Erfindung angesehen werden, die eingangs beschriebene Anordnung zur Steuerung von Ultraschallsensoren so weiterzuentwickeln, dass aus Kostengründen und hinsichtlich einer Optimierung der insbesondere zeitkritischen Signalverarbeitung auch eine Reduzierung der Steuergeräte bzw. Mikroprozessoren erreichbar ist.

### Darstellung der Erfindung

Die Erfindung geht von einer Anordnung zur Steuerung von Ultraschallsensoren aus, insbesondere für ultraschallbasierende Umfelderkennungssysteme in einem Kraftfahrzeug, mit einer als ASIC ausgebildeten Schnittstelleneinheit zwischen dem mindestens einen Ultraschallsensor und einem Steuergerät. Bei der erfindungsgemäßen Anordnung ist eine, vorzugsweise für alle Ultraschallsensoren zuständige Schnittstelleneinheit in vorteilhafter Weise so ausgeführt, dass diese alle zeitkritischen Sende- Empfangs- und Programmiermodi in den Ultraschallsensoren selbstständig steuert und die ermittelten Messdaten über entsprechende Kommunikationsleitungen dem Steuergerät zur Verfügung stellt.

Die als ASIC ausgebildete Schnittstelleneinheit ist dabei in ein übergeordnetes auch für andere Steuerungsaufgaben zuständiges Steuergerät integriert und als zeitkritische Modi sind sowohl ein reiner Sende-Empfangsmodus, ein reiner Empfangsmodus als auch ein Programmiermodus für die Ultraschallsensoren ausführbar. In vorteilhafter Weise kann zusätzlich eine sogenannte "time of flight"-Messung der Ultraschallpakete der Ultraschallsensoren für eine direkte und/oder eine indirekte Messung ausführbar sein und auch zusätzlich eine Analyse der Messung der Ultraschallpakete der Ultraschallsensoren hinsichtlich der Dauer eines Echos und/oder das Auftreten von höheren Echos von einem mit dem Ultraschallsensor erfassten Objekt ausgeführt werden.

Die mit dem erfindungsgemäßen ASIC ermittelten Messdaten können über serielle oder parallele Kommunikationsleitungen intern dem Steuergerät zur Verfügung gestellt werden.

Ferner ist es auch möglich, dass die als ASIC ausgebildete Schnittstelleneinheit für ausgewählte Signalverarbeitungsaufgaben noch einen kostengünstig minimalisierten Mikroprozessor enthält, mit dem dann zum Beispiel eine Datenanalyse und/oder -diagnose, insbesondere zur Berechnung von realen Abständen von Objekten zum Kraftfahrzeug, durchführbar ist.

Zusammenfassend ist festzustellen, dass das Prinzip der vorgeschlagenen erfindungsgemäßen Lösung darin besteht, dass ein ASIC als Schnittstelleneinheit vorgesehen werden soll, welcher in der Lage ist zwischen 1 und beispielsweise maximal 16 Ultraschallsensoren anzusteuern bzw. entsprechende Pegel zu generieren. Dieser ASIC soll dann in der Lage sein, in mindestens 3 Modi zu arbeiten, reiner Sende-Empfangsmodus, reiner Empfangsmodus und in einem Programmiermodus.

Weiter soll er noch in der Lage sein, eine "time of flight" Messung der Ultraschallpakete der Ultraschallsensoren durchzuführen, wobei die "time of flight" Messung sowohl für eine direkte als auch für eine indirekte Messung möglich sein soll. Der ASIC soll ferner noch in der Lage sein, weitere digitale Informationen, welche durch die Analyse der "Sensor Date Line" möglich sind, zu erfassen, z.B. die Dauer eines Echos bei der Aussendung und dem Empfang der Ultraschallpakete oder das Auftreten von höheren Echos etc..

### Kurze Beschreibung der Zeichnung

Ein Ausführungsbeispiel der Erfindung wird anhand der Figur der Zeichnung erläutert. Es zeigt:

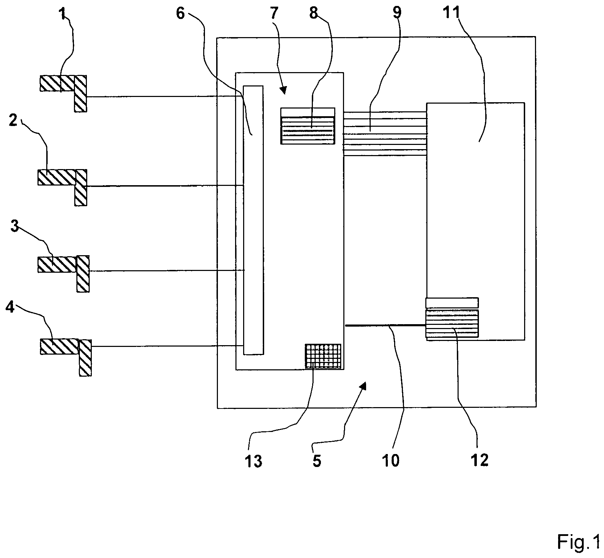

Figur 1 zeigt ein schematisches Blockschaltbild eines Steuergeräts in einem Kraftfahrzeug mit einem integrierten ASIC zur Signalverarbeitung der Signale von Ultraschallsensoren.

### Weg zur Ausführung der Erfindung

Aus Figur 1 ist eine Anordnung zur Steuerung von Ultraschallsensoren 1, 2, 3 und 4 zu entnehmen, die bei ultraschallbasierenden Umfelderkennungssystemen in einem Kraftfahrzeug, zum Beispiel bei Parkassistenzsystemen, anwendbar ist. Viele Funktionen und die Signalauswertungen der Ultraschallsensoren 1, 2,3 und 4, zum Beispiel die komplette Datenanalyse, das Betriebssystem, die Diagnosesoftware, HMI oder ähnliches, werden bei dem erfindungsgemäßen Ausführungsbeispiel von einem Steuergerät 5 gesteuert, das hier ein nicht extra für das Umfelderkennungssystem ausgebildetes Steuergerät ist, sondern ein sogenanntes fremdes Steuergerät (ECU) sein kann, das für andere Funktionen (zum Beispiel BCM=Body Control Modul, REM=Rear End Modul oder FAS=Fahrassistenz ECU) ohnehin schon im Kraftfahrzeug vorhanden ist, sodass ein separates Steuergerät für das Umfelderkennungssystem hier nicht notwendig ist.

Die Ultraschallsensoren 1, 2, 3 und 4 sind über einen Pegelbaustein 6 mit einem als ASIC ausgebildeten Schnittstellenbaustein 7 verbunden, der so ausgebildet ist, dass diese alle zeitkritischen Sende- Empfangs- und Programmiermodi in den Ultraschallsensoren 1 bis 4 von diesem selbstständig gesteuert werden können und die ermittelten Messdaten beispielsweise über ein Register 8 und parallele Kommunikationsleitungen 9 oder über serielle Kommunikationsleitungen 10 (SPI) einem Mikroprozessor 11 im Steuergerät 5 zur Verfügung gestellt werden. Die Kommunikationsleitungen 10 (SPI) sind dabei auf ein Register 12 im Mikroprozessor 11 im Steuergerät 5 geführt.

Im als ASIC ausgebildeten Schnittstellenbaustein 7 kann auch zusätzlich eine sogenannte "time of flight"-Messung der Ultraschallpakete der Ultraschallsensoren 1 bis 4 für eine direkte und/oder eine indirekte Messung ausführbar sein und auch zusätzlich eine Analyse der Messung der Ultraschallpakete der Ultraschallsensoren 1 bis 4 hinsichtlich der Dauer eines Echos und/oder das Auftreten von höheren Echos von einem mit dem Ultraschallsensor zu erfassenden hier nicht dargestellten Objekts ausgeführt werden.

Bei dem hier gezeigten Ausführungsbeispiel ist die als ASIC ausgebildete Schnittstelleneinheit 7 außerdem noch mit einem weiteren Mikroprozessor 13 versehen, mit dem dann zum Beispiel eine Datenanalyse und/oder -diagnose, insbesondere zur Berechnung von realen Abständen von Objekten zum Kraftfahrzeug, mit dem Umfelderkennungssystem durchführbar ist, was dann somit nicht von dem fremden Steuergerät 5 direkt ausgeführt werden muss.

## Patentansprüche

1. Anordnung zur Steuerung von Ultraschallsensoren (1,2,3,4), insbesondere für ultraschallbasierende Umfelderkennungssysteme in einem Kraftfahrzeug, mit mindestens einer Schnittstelleneinheit (7) zwischen dem mindestens einen Ultraschallsensor (1,2,3,4) und einem bereits für andere Steuerungsaufgaben im Kraftfahrzeug vorgesehenen Steuergerät (5), wobei die Schnittstelleneinheit (7) alle zeitkritischen Sende-, Empfangs- und Programmiermodi aller Ultraschallsensoren (1,2,3,4) selbstständig steuert und die ermittelten Signale über entsprechende Kommunikationsleitungen (9,10) dem Steuergerät (5) zur Verfügung stellt, **dadurch gekennzeichnet, dass** die Schnittstelleneinheit (7) als ASIC ausgebildet ist und in das Steuergerät (5) integriert ist.

2. Anordnung nach Anspruch 1, **dadurch gekennzeichnet, dass** als zeitkritische Modi ein reiner Sende-Empfangsmodus, ein reiner Empfangsmodus und/oder ein Programmiermodus für die Ultraschallpakete der Ultraschallsensoren (1,2,3,4) ausführbar sind.

3. Anordnung nach einem der vorhergehenden Ansprüche, **dadurch gekennzeichnet, dass** zusätzlich eine "time of flight"-Messung der Ultraschallpakete der Ultraschallsensoren (1,2,3,4) für eine direkte und/oder eine indirekte Messung ausführbar ist.

4. Anordnung nach einem der vorhergehenden Ansprüche, **dadurch gekennzeichnet, dass** zusätzlich eine Analyse der Messung der Ultraschallpakete der Ultraschallsensoren (1,2,3,4) hinsichtlich der Dauer eines Echos und/oder das Auftreten von höheren Echos von einem mit dem jeweiligen Ultraschallsensor (1,2,3,4) zu erfassenden Objekt ausführbar ist.

5. Anordnung nach einem der vorhergehenden Ansprüche, **dadurch gekennzeichnet, dass** die ermittelten Signale oder Messdaten über eine serielle Kommunikationsleitung (10) dem Steuergerät (5) zur Verfügung gestellt sind.

6. Anordnung nach einem der Ansprüche 1 bis 4, **dadurch gekennzeichnet, dass** die ermittelten Signale oder Messdaten über eine parallele Kommunikationsleitung (9) dem Steuergerät (5) zur Verfügung gestellt sind.

7. Anordnung nach einem der vorhergehenden Ansprüche, **dadurch gekennzeichnet, dass** die mindestens eine als ASIC ausgebildete Schnittstelleneinheit (7) einen integrierten minimalisierten Mikroprozessor (13) enthält.

8. Anordnung nach Anspruch 7, **dadurch gekennzeichnet, dass** mit dem integrierten minimalisierten Mikroprozessor (13) eine Datenanalyse und/oder - diagnose, insbesondere zur Berechnung von realen Abständen von Objekten zum Kraftfahrzeug, mit dem Umfelderkennungssystem durchführbar ist.

## Claims

1. Arrangement for controlling ultrasonic sensors (1, 2, 3, 4), in particular for ultrasound-based environment detection systems in a motor vehicle, having at least one interface unit (7) between the at least one ultrasonic sensor (1, 2, 3, 4) and a control device (5) already provided in the motor vehicle for other control tasks, wherein the interface unit (7) independently controls all time-critical transmitting, receiving and programming modes of all ultrasonic sensors (1, 2, 3, 4) and provides the control device (5) with the determined signals via corresponding communication lines (9, 10), **characterized in that** the interface unit (7) is in the form of an ASIC and is integrated in the control device (5).

2. Arrangement according to Claim 1, **characterized in that** a pure transmitting/receiving mode, a pure receiving mode and/or a programming mode can be implemented as time-critical modes for the ultrasonic packages of the ultrasonic sensors (1, 2, 3, 4).

3. Arrangement according to one of the preceding claims, **characterized in that** a "time-of-flight" measurement of the ultrasonic packages of the ultrasonic sensors (1, 2, 3, 4) can be additionally carried out for a direct and/or indirect measurement.

4. Arrangement according to one of the preceding claims, **characterized in that** the measurement of the ultrasonic packages of the ultrasonic sensors (1, 2, 3, 4) can be additionally analysed with respect to the duration of an echo and/or the occurrence of higher echoes from an object to be sensed using the respective ultrasonic sensor (1, 2, 3, 4).

5. Arrangement according to one of the preceding claims, **characterized in that** the determined signals or measurement data are made available to the control device (5) via a serial communication line (10) .

6. Arrangement according to one of Claims 1 to 4, **characterized in that** the determined signals or measurement data are made available to the control device (5) via a parallel communication line (9).

7. Arrangement according to one of the preceding claims, **characterized in that** the at least one interface unit (7) in the form of an ASIC contains an integrated minimized microprocessor (13).

8. Arrangement according to Claim 7, **characterized in that** the integrated minimized microprocessor (13) can be used to carry out a data analysis and/or data diagnosis, in particular for calculating real distances between objects and the motor vehicle, using the environment detection system.

## Revendications

1. Arrangement de commande de capteurs à ultrasons (1, 2, 3, 4), notamment pour des systèmes de reconnaissance d'environnement à base d'ultrasons dans un véhicule automobile, comprenant au moins une unité d'interface (7) entre l'au moins un capteur à ultrasons (1, 2, 3, 4) et un contrôleur (5) déjà présent dans le véhicule automobile pour d'autres tâches de commande, l'unité d'interface (7) commandant de manière autonome tous les modes d'émission, de réception et de programmation chronosensibles de tous les capteurs à ultrasons (1, 2, 3, 4) et mettant les signaux déterminés à la disposition du contrôleur (5) par le biais de lignes de communication (9, 10) correspondantes,
**caractérisé en ce que** l'unité d'interface (7) est réalisée sous la forme d'un ASIC et est intégrée dans le contrôleur (5).

2. Arrangement selon la revendication 1, **caractérisé en ce que** les modes chronosensibles qui peuvent être exécutés sont un mode purement d'émission-réception, un mode purement de réception et/ou un mode de programmation pour les paquets d'ultrasons des capteurs à ultrasons (1, 2, 3, 4).

3. Arrangement selon l'une des revendications précédentes, **caractérisé en ce qu'**une mesure du « temps de vol » des paquets d'ultrasons des capteurs à ultrasons (1, 2, 3, 4) peut en plus être réalisée pour une mesure directe et/ou indirecte.

4. Arrangement selon l'une des revendications précédentes, **caractérisé en ce qu'**une analyse de la mesure des paquets d'ultrasons des capteurs à ultrasons (1, 2, 3, 4) peut en plus être réalisée pour ce qui concerne la durée d'un écho et/ou la survenance d'échos plus élevés d'un objet à détecter avec le capteur à ultrasons (1, 2, 3, 4) respectif.

5. Arrangement selon l'une des revendications précédentes, **caractérisé en ce que** les signaux ou les données de mesure déterminés sont mis à la disposition du contrôleur (5) par le biais d'une ligne de communication série (10).

6. Arrangement selon l'une des revendications 1 à 4, **caractérisé en ce que** les signaux ou les données de mesure déterminés sont mis à la disposition du contrôleur (5) par le biais d'une ligne de communication parallèle (9) .

7. Arrangement selon l'une des revendications précédentes, **caractérisé en ce que** l'au moins une unité d'interface (7) réalisée sous la forme d'un ASIC contient un microprocesseur (13) minimalisé intégré.

8. Arrangement selon la revendication 7, **caractérisé en ce qu'**une analyse et/ou un diagnostic des données peuvent être effectués avec le microprocesseur (13) minimalisé intégré, notamment en vue de calculer des distances réelles entre des objets et le véhicule automobile, avec le système de reconnaissance d'environnement.
